# EUROPEAN PATENT APPLICATION

(11) **EP 2 421 309 A1**
(43) Date of publication of application: **22.02.2012**
(21) Application number: 10764503.8
(22) Date of filing: 15.04.2010
(51) Int. Cl.: H04W 52/12, H04J 13/00, H04W 52/24, H04W 52/34

(54) **WIRELESS BASE STATION**

(30) Priority: 15.04.2009 JP 2009099264
(71) Applicant: NTT DOCOMO, INC., Chiyoda-ku Tokyo 100-6150 (JP)
(72) Inventor: YAJIMA, Tatsuro, Tokyo 100-6150 (JP); HANAKI, Akihito, Tokyo 100-6150 (JP); OYANE, Hidehiko, Tokyo 100-6150 (JP)
(74) Representative: HOFFMANN EITLE
(86) International application number: PCT/JP2010/056755
(87) International publication number: WO 2010/119921

(57) **Abstract**

A radio base station Nodes includes a transmission power control unit 13 configured to perform inner-loop transmission power control on an E-DPDCH, a scheduling unit 16 configured to determine AG to be transmitted to a mobile station UE which is subjected to scheduling of an EUL communication at a next TTI so that the total received power satisfies the target total received power, a scheduling grant information transmission unit 17 configured to transmit the AG determined to the mobile station UE which is subjected to scheduling of the EUL communication at a next TTI, and a target total received power setting unit 14 configured to change the target total received power depending on, if the normal uplink communication is provided, or if a plurality of the high-speed uplink communications are provided.

## Description

### TECHNICAL FIELD

The present invention relates to a radio base station.

### BACKGROUND ART

A high-speed uplink communication called as "EUL (Enhanced Uplink) communication" has been considered to be provided in the WCDMA mobile communication system.

In the EUL communication, a mobile station UE is configured to determine transmission power of a data signal to be transmitted via a dedicated data channel for a high-speed uplink communication (E-DPDCH: E-DCH Dedicated Physical Data Channel) based on a transmission power ratio between the E-DPDCH and a dedicated control channel for a normal uplink communication (DPCCH: Dedicated Physical Control Channel), which correspond to received scheduling grant information (AG: Absolute Grant).

Here, a radio base station NodeB is configured to perform inner-loop transmission power control on the DPCCH by comparing a receiving quality (for example, receiving SIR) of a control signal received via the DPCCH with a target receiving quality (for example, target receiving SIR).

In addition, in the EUL communication, the radio base station NodeB is configured to determine scheduling grant information to be transmitted to a mobile station UE which is subj ected to scheduling at the next time slot (TTI: Transmission Time Interval) so that a total received power (RTWP: Received Total Wideband Power) satisfies a target total received power (target RTWP).

Here, the RTWP is power which is a sum of a data signal and a control signal in the EUL communication, a data signal and a control signal in the normal uplink communication, and noise power.

### SUMMARY OF THE INVENTION

### PROBLEMS TO BE SOLVED BY THE INVENTION

However, if the target RTWP is not properly set, in particular, if the target RTWP is set excessively high, the following problems may occur.

Firstly, when a normal uplink communication is started between a radio base station NodeB and a new mobile station UE#2 in a state where EUL communication is performed, the target RTWP is set to be closer to maximum allowable receiving power in the radio base station NodeB in the EUL communication. Accordingly, a target SIR of the control signal received via DPCCH according to the normal uplink communication is not satisfied. Thus, transmission power of the control signal which is transmitted via DPCCH and a data signal which is transmitted via DPDCH is increased by inner-loop transmission power control on the DPCCH.

Here, the transmission power of the data signal which is transmitted via the DPDCH is power that is made higher by a predetermined offset than the transmission power of the control signal which is transmitted via the DPCCH.

Secondly, since the transmission power of the control signal which is transmitted via the DPCCH and the data signal which is transmitted via the DPDCH is increased, the target SIR of the control signal received via the DPCCH according to the EUL communication is not satisfied in the radio base station NodeB. Accordingly, the transmission power of the control signal transmitted via the DPCCH and the data signal transmitted via the E-DPDCH is increased by the inner-loop transmission power control on the DPCCH.

As a result, the transmission power of the control signal transmitted via the DPCCH and the data signal transmitted via the DPDCH according to the normal uplink communication is further increased. Thereafter, the transmission power of the control signal transmitted via the DPCCH and the data signal transmitted via the E-DPDCH according to the EUL communication is further increased. These phenomena are repeated. Thus, there is a problem in that communication incapability is caused due to excess of the RTWP in the radio base station NodeB.

In this regard, the present invention has been made in view of the above-described problems. Accordingly, an objective of the invention is to provide a radio base station which can avoid falling into a situation of communication incapability caused by the excess of total received power in a case where a high-speed uplink communication like EUL communication is performed.

### MEANS FOR SOLVING THE PROBLEMS

The first feature of present invention is summarized in that a radio base station used in a mobile communication system in which a mobile station is configured to determine transmission power of a data signal to be transmitted via a dedicated data channel for a high-speed uplink transmission based on a transmission power ratio between the dedicated data channel for a high-speed uplink communication and a dedicated control channel for a normal uplink communication, which correspond to received scheduling grant information, the radio base station, including: a transmission power control unit configured to perform inner-loop transmission power control on the uplink dedicated control channel by comparing a receiving quality of a control signal received via the dedicated control channel for a normal uplink communication with a target receiving quality; a total received power measuring unit configured to measure total received power; a target total received power setting unit configured to set target total received power; a scheduling unit configured to determine scheduling grant information to be transmitted to a mobile station which is subjected to scheduling of the high-speed uplink communication at a next time slot so that the total received power measured by the total received power measuring unit satisfies the target total received power set by the target total received power setting unit; and a scheduling grant information transmission unit configured to transmit the scheduling grant information determined by the scheduling unit to the mobile station which is subjected to scheduling of the high-speed uplink communication at a next TTI, wherein the target total received power setting unit is configured to change the target total received power depending on, if the normal uplink communication is provided, or if a plurality of the high-speed uplink communications are provided.

In the first feature of present invention, the target total received power setting unit may be configured to set target total received power when the normal uplink communication is provided or the plurality of high-speed uplink communications are provided to be smaller than target total received power when the normal uplink communication is not provided or the plurality of high-speed uplink communications are not provided.

In the first feature of present invention, the scheduling unit may be configured to use one mobile station as a mobile station which is subjected to scheduling of the high-speed uplink communication at each TTI, and
the scheduling grant information transmission unit is configured to transmit the scheduling grant information determined by the scheduling unit to one mobile station which is subjected to scheduling of the high-speed uplink communication at the next TTI when the mobile station UE which is subjected to scheduling of the high-speed uplink communication is switched, and to transmit scheduling grant information instructing to stop transmission of a data signal via the dedicated data channel for a high-speed uplink communication at the next TTI to one mobile station which is subjected to scheduling of a high-speed uplink communication at a current TTI.

In the first feature of present invention, the target total received power setting unit may be configured to change the target total received power when receiving a message requesting to establish the dedicated control channel for a normal uplink communication and a dedicated data channel for a normal uplink communication from a radio controller.

### EFFECTS OF THE INVENTION

As described above, the present invention can provide a radio base station which can avoid falling into a situation of communication incapability caused by the excess of total received power when a high-speed uplink communication like EUL communication is performed.

### BRIEF DESCRIPTION OF THE DRAWINGS

[Fig. 1] Fig. 1 is an entire configuration diagram of a mobile communication system according to a first embodiment of the invention.
[Fig. 2] Fig. 2 is a functional block diagram of a radio base station according to the first embodiment of the invention.
[Fig. 3] Fig. 3 is a drawing showing scheduling which is performed by the radio base station according to the first embodiment of the invention.
[Fig. 4] Fig. 4 is a flowchart illustrating an operation of the mobile base station according to the first embodiment of the invention.
[Fig. 5] Fig. 5 is a flowchart showing an operation of the radio base station according to the first embodiment of the invention.

### MODE FOR CARRYING OUT THE INVENTION

### (Configuration of a mobile communication system according to a first embodiment of the invention)

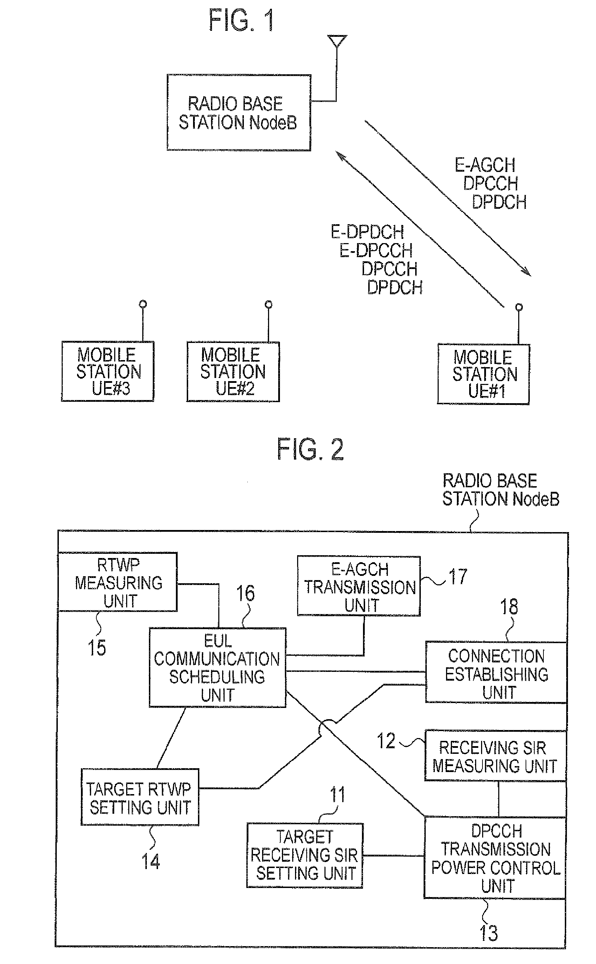

Referring to Figs. 1 through 3, the configuration of a mobile communication system according to a first embodiment of the invention is described.

As shown in Fig. 1, the mobile communication system according to the present embodiment is configured to be capable of providing an EUL communication (high-speed uplink communication) and a normal uplink communication between a radio base station NodeB and a mobile station UE.

Specifically, the mobile communication system according to the embodiment is capable of setting, as a downlink channel, an absolute grant channel (E-AGCH: E-DCH Absolute Grant Channel), a relative grant channel (E-RGCH: E-DCH Relative Grant Channel), a dedicated control channel for a normal downlink communication (DPCCH: Dedicated Physical Control Channel), a dedicated data channel for a normal downlink communication (DPDCH: Dedicated Physical Data Channel), and the like, and is capable of setting, as an uplink channel, a dedicated data channel for an EUL communication (E-DPDCH: D-DCH Dedicated Physical Data Channel), a dedicated control channel for an EUL communication (E-DPCCH: E-DCH Dedicated Physical Control Channel), a dedicated control channel for a normal uplink communication, a dedicated data channel for a normal uplink communication, and the like, between the radio base station NodeB and the mobile station UE.

In the mobile communication system according to the embodiment, when the EUL communication is performed, the mobile station UE which is subjected to scheduling at each TTI is configured to determine transmission power (or transmission amplitude) of a data signal which is transmitted via E-DPDCH based on a transmission power ratio between E-DPDCH and DPCCH (or a transmission amplitude ratio between E-DPDCH and DPCCH) which correspond to AG (scheduling grant information) received from the radio base station NodeB.

### Note that the TTI is specified to be 2 ms or 10 ms in the EUL.

As shown in Fig. 2, the radio base station NodeB according to the embodiment includes a target receiving SIR setting unit 11, a receiving SIR measuring unit 12, a DPCCH transmission power control unit 13, a target RTWP setting unit 14, a RTWP measuring unit 15, an EUL communication scheduling unit 16, an E-AGCH transmission unit 17, and a connection establishing unit 18.

The target receiving SIR setting unit 11 is configured to set a target receiving quality (for example, a target receiving SIR) of a control signal received via DPCCH.

The receiving SIR measuring unit 12 is configured to measure a receiving quality (for example, receiving SIR) of a control signal received via DPCCH.

The DPCCH transmission power control unit 13 is configured to perform inner-loop transmission power control on the DPCCH by comparing the receiving quality (for example, receiving SIR) of the control signal received via the DPCCH with a target receiving quality (for example, target receiving SIR).

Specifically, the DPCCH transmission power control unit 13 is configured to perform the inner-loop transmission power control on the DPCCH to transmit a TPC (Transmission Power Control) command instructing an increase or decrease of transmission power of the control signal which is transmitted via the DPCCH in the mobile station UE.

Here, for example, the inner-loop transmission power control on the DPCCH may be performed for each slot.

The target RTWP setting unit 14 is configured to set target RTWP in the radio base station NodeB.

Here, the target RTWP setting unit 14 may be configured to change the target RTWP according to if a normal uplink communication is provided in the radio base station NodeB, in other words, if DPDCH is set as an uplink channel.

Or, the target RTWP setting unit 14 may be configured to change the target RTWP according to if multiple high-speed uplink communications are provided in the radio base station NodeB, in other words, if multiple E-DPDCH and E-DPCCH are set as uplink channels.

Also, the target RTWP setting unit 14 may be configured to set the target RTWP in a case where a normal uplink communication is provided in the radio base station NodeB to be smaller than target RTWP in a case where a normal uplink communication is not provided in the radio base station NodeB.

Moreover, the target RTWP setting unit 14 may be configured to set target RTWP in a case where multiple high-speed uplink communications are provided in the radio base station NodeB to be smaller than target RTWP in a case where multiple high-speed uplink communications are not provided in the radio base station NodeB.

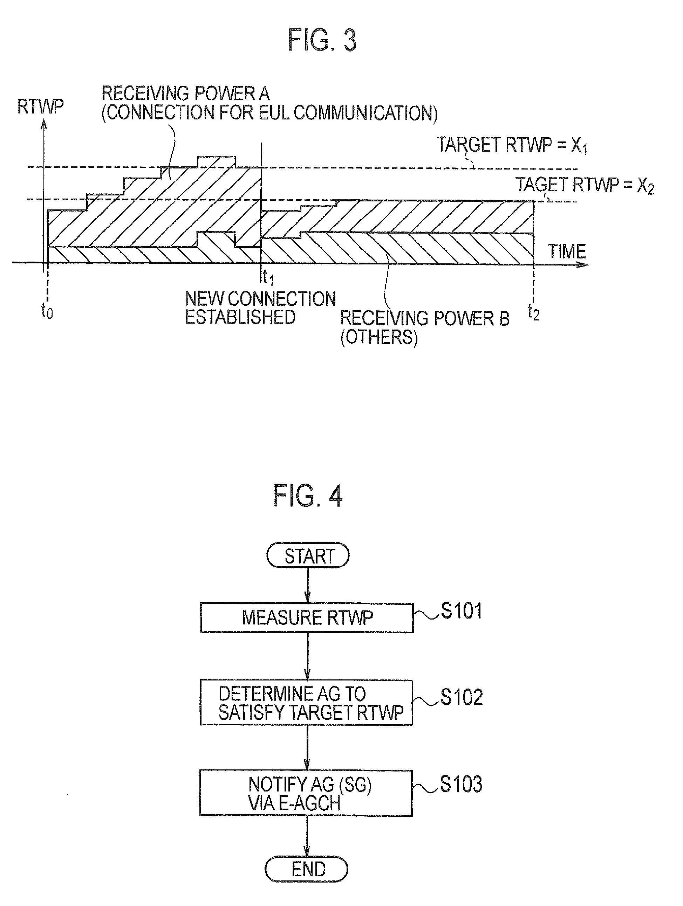

For example, as shown in Fig. 3, the EUL communication for one mobile station UE is only performed in the radio base station NodeB during time period between time t0 and t1, and a normal uplink communication is not performed. The target RTWP setting unit 14 sets the target RTWP to be "X1" during the corresponding period.

After that, at time t1, a normal uplink communication or a high-speed uplink communication is started anew in the radio base station NodeB. In other words, new DPDCH and DPCCH or E-DPCCH and E-DPCCH are set as uplink channels. As a result, the target RTWP setting unit 14 decreases the target RTWP after time t1 from "X1" to "X2".

In other words, the target RTWP setting unit 14 is configured to set the target RTWP to be smaller when a normal uplink communication is started, that is, DPDCH and DPCCH are set as uplink channels in the radio base station NodeB.

Moreover, the target RTWP setting unit 14 is configured to set target RTWP to be smaller when a high-speed uplink communication is started anew, that is, when multiple E-DPDCH and E-DPCCH are set as uplink channels in the radio base station NodeB.

Furthermore, the target RTWP setting unit 14 may be configured to set target RTWP to be larger when a normal uplink communication is finished, that is, when DPDCH and DPCCH as uplink channels are released in the radio base station NodeB.

Also, the target RTWP setting unit 14 is configured to set target RTWP to be smaller when the high-speed uplink communication other than one high-speed uplink communication is released, that is, when E-DPDCH and E-DPCCH other than one as uplink channels are released in the radio base station NodeB.

Note that, the target RTWP setting unit 14 may be configured to change target total received power when an NBAP (NodeB Application Part) message "Radio Link Setup Request" requesting to establish DPDCH and DPCCH as uplink channels is received from a radio controller RNC.

For example, the target RTWP setting unit 14 may set "X1", which is higher target RTWP, to be as much as a value which is capable of receiving an RRC message "RRC Connection Request" which is transmitted by the mobile station via a PRACH (Physical Random Access Channel) and may set "X2", which is lower target RTWP, to be as much as a value which is capable of receiving an RRC message "RRC Connection Setup Complete" which is transmitted by the mobile station when an NBAP message "Radio Link Setup Request" is received.

Moreover, the target RTWP setting unit 14 may be configured to change target total received power when it is detected that the mobile station UE having performed a normal uplink communication under the radio base station NodeB starts a high-speed uplink communication.

Furthermore, the target RTWP setting unit 14 may be configured to change the target total received power when the mobile station UE performing the high-speed uplink communication enters an area under the command of the radio base station NodeB by handover.

As described above, the target RTWP setting unit 14 may be configured to change the target total received power when the number of communications of the mobile stations UE under the command of the radio base station NodeB is changed.

The RTWP measuring unit 15 is configured to measure RTWP in the radio base station NodeB.

The EUL communication scheduling unit 16 is configured to determine, at each TTI, a mobile station UE which is subjected to scheduling and AG which is assigned to the mobile station UE to be subjected to the scheduling.

Specifically, the EUL communication scheduling unit 16 is configured to determine AG to be transmitted to the mobile station UE which is subjected to scheduling of the EUL communication at next TTI so that the RTWP measured by the RTWP measuring unit 15 satisfies the target RTWP set by the target RTWP setting unit 14.

Also, the EUL communication scheduling unit 16 may be configured to set one mobile station UE as the mobile communication UE which is subjected to scheduling of the EUL communication at each TTI.

For example, a value of AG may be changed every three slots in the shortest period of time.

The E-AGCH transmission unit 17 is configured to transmit AG determined by the EUL communication scheduling unit 16 via E-AGCH to the mobile station UE which is subjected to scheduling of the EUL communication at the next TTI.

Specifically, the E-AGCH transmission unit 17 may be configured to transmit AG determined by the EUL communication scheduling unit 16 to the one mobile station UE which is subjected to scheduling of the EUL communication at the next TTI when the mobile station UE which is subjected to scheduling of the EUL communication is switched, and to transmit "Zero Grant (scheduling grant information)" instructing to stop the transmission of a data signal via E-DPDCH at the next TTI to one mobile station UE which is subjected to scheduling of the EUL communication at the current TTI.

The connection establishing unit 18 is configured to perform setup processing for the above-described uplink channel or downlink channel.

### (Operation of the mobile communication system according to the first embodiment of the invention)

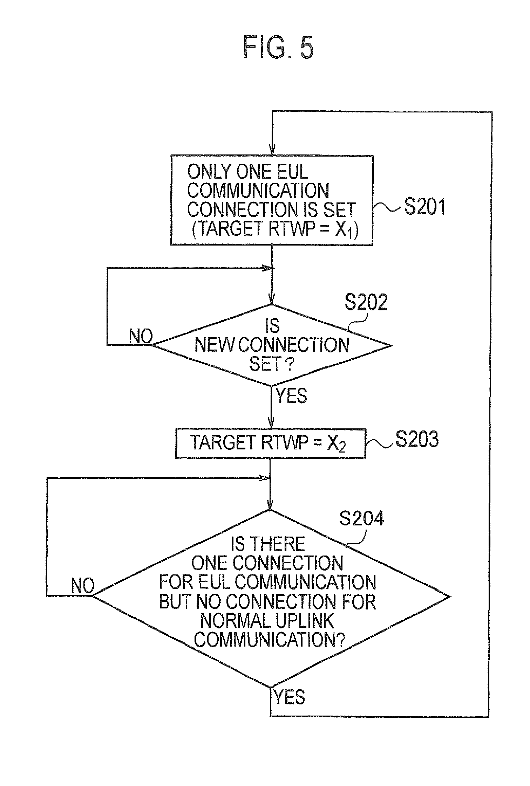

The operation of the radio base station NodeB which is used in the mobile communication system according to the first embodiment of the invention is described by referring to Figs. 4 and 5.

Firstly, the description is given by referring to Fig. 4 of scheduling processing which is performed in the radio base station NodeB when EUL communication is performed.

As shown in Fig. 4, at step S101, the radio base station NodeB measures RTWP at each TTI.

At step S102, the radio base station NodeB determines an AG to be transmitted to a mobile station UE which is subjected to scheduling at the next TTI so that RTWP at the next TTI satisfies target RTWP.

At step S103, the radio base station NodeB transmits the AG via E-AGCH to the mobile station UE which is subjected to scheduling at the next TTI.

Secondly, the description is given by referring to Fig. 5 of processing of changing the target RTWP, which is performed in the radio base station NodeB when EUL communication is performed.

As shown in Fig. 5, in a state where only EUL communication connection (E-DPDCH and E-DPCCH) is established in the radio base station NodeB (step S201), when a new connection (for example, DPDCH and DPCCH as uplink channels) is established (YES at step S202), at step S203, the target RTWP is decreased from "X1" to "X2".

After that, when a connection other than the EUL communication connection (for example, DPDCH and DPCCH as uplink channels) is released in the radio base station NodeB, or in a state where multiple EUL communication connections (E-DPDCH and E-DPCCH) are established, when the EUL communication connections are released and there is only one EUL communication connection (YES at Step S202), at step S201, the target RTWP is increased from "X2" to "X1".

### (Advantageous effects of the mobile communication system according to the first embodiment of the invention)

The radio base station NodeB which is used in the mobile communication system according to the first embodiment of the invention is configured to decrease target RTWP if a normal uplink communication is started or multiple high-speed uplink communications are started in a state where EUL communication is performed. Accordingly, a situation of communication incapability caused by excess of total received power in the conventional EUL communication can be avoided.

Moreover, the radio base station NodeB which is used in the mobile communication system according to the first embodiment of the invention sets "X1", which is higher target RTWP, to be as much as a value which is capable of receiving an RRC message "RRC Connection Request" and sets "X2", which is lower target RTWP, to be as much as a value which is capable of receiving an RRC message "RRC Connection Setup Complete". Accordingly, when a normal uplink communication connection is established, the mobile station UE can receive the RRC message "RRC Connection Setup" transmitted by the radio base station NodeB but the radio base station NodeB cannot receive the RRC message "RRC Connection Setup Complete" transmitted by the mobile station UE. Thus, a situation of call loss can be avoided.

Note that operations of the above-described radio base station Node and mobile station UE may be implemented by hardware or may be implemented by a software module to be executed by a processor, or may be implemented in combination of the both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASPIC. The ASIC may be provided in the radio base station Node and the mobile station UE. Also, the storage medium and the processor may be provided in the radio base station Node and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the description of the scope of claims. Thus, what is described herein is for illustrative purpose, and has no intention whatsoever to limit the present invention.

## Claims

1. A radio base station used in a mobile communication system in which a mobile station is configured to determine transmission power of a data signal to be transmitted via a dedicated data channel for a high-speed uplink transmission based on a transmission power ratio between the dedicated data channel for a high-speed uplink communication and a dedicated control channel for a normal uplink communication, which correspond to received scheduling grant information, the radio base station, comprising:
a transmission power control unit configured to perform inner-loop transmission power control on the uplink dedicated control channel by comparing a receiving quality of a control signal received via the dedicated control channel for a normal uplink communication with a target receiving quality;
a total received power measuring unit configured to measure total received power;
a target total received power setting unit configured to set target total received power;
a scheduling unit configured to determine scheduling grant information to be transmitted to a mobile station which is subjected to scheduling of the high-speed uplink communication at a next time slot so that the total received power measured by the total received power measuring unit satisfies the target total received power set by the target total received power setting unit; and
a scheduling grant information transmission unit configured to transmit the scheduling grant information determined by the scheduling unit to the mobile station which is subjected to scheduling of the high-speed uplink communication at a next TTI, wherein
the target total received power setting unit is configured to change the target total received power depending on, if the normal uplink communication is provided, or if a plurality of the high-speed uplink communications are provided.

2. The radio base station according to claim 1, wherein the target total received power setting unit is configured to set target total received power when the normal uplink communication is provided or the plurality of high-speed uplink communications are provided to be smaller than target total received power when the normal uplink communication is not provided or the plurality of high-speed uplink communications are not provided.

3. The radio base station according to claim 1 or 2, wherein the scheduling unit is configured to use one mobile station as a mobile station which is subjected to scheduling of the high-speed uplink communication at each TTI, and
the scheduling grant information transmission unit is configured to transmit the scheduling grant information determined by the scheduling unit to one mobile station which is subjected to scheduling of the high-speed uplink communication at the next TTI when the mobile station UE which is subjected to scheduling of the high-speed uplink communication is switched, and to transmit scheduling grant information instructing to stop transmission of a data signal via the dedicated data channel for a high-speed uplink communication at the next TTI to one mobile station which is subjected to scheduling of a high-speed uplink communication at a current TTI.

4. The radio base station according to any one of claims 1 to 3, wherein the target total received power setting unit is configured to change the target total received power when receiving a message requesting to establish the dedicated control channel for a normal uplink communication and a dedicated data channel for a normal uplink communication from a radio controller.
